# FASCICULE DE BREVET EUROPEEN

(11) **EP 1 382 858 B1**
(45) Date de publication et mention de la délivrance du brevet: **09.01.2008**
(21) Numéro de dépôt: 03291757.7
(22) Date de dépôt: 16.07.2003
(51) Int. Cl.: F04D 29/66, F01D 5/02

(54) **Procédé de répartition d'aubes de rotor de turbomachine**
Verteilungssystem für Rotorschaufeln einer Turbomaschine
Distribution method for rotor blades of a turbomachine

(30) Priorité: 17.07.2002 FR 0209027
(43) Date de publication de la demande: 21.01.2004
(73) Titulaire: SNECMA, 75015 Paris (FR)
(72) Inventeur: Berger, Daniel, 77370 La Chapelle Rablais (FR); Tranchier, Jean-Louis, 77240 Vert Saint Denis (FR)
(74) Mandataire: David, Alain

(56) Documents cités:
- GB-A- 2 245 661
- US-A- 4 767 272

## Description

### Domaine de l'invention

La présente invention se rapporte au domaine général des rotors de soufflantes, compresseurs ou turbines dans les turbomachines et elle concerne plus particulièrement un procédé de répartition des aubes de rotors de turbomachines.

### Art antérieur

La répartition des aubes ou pales sur le rotor d'une turbomachine est un élément fondamental pour la tenue (l'équilibrage) de ces aubes mobiles en fonctionnement (à voir le document US 4 767 272 qui décrit un procédé d'équilibrage d'aubes). En effet, une mauvaise répartition entraîne la création de balourds consécutifs à des comportements différents sous un même chargement centrifuge de ces aubes mobiles. Ces balourds sont à l'origine de niveaux vibratoires importants ayant un impact non négligeables sur les caractéristiques mécaniques et acoustiques de la turbomachine et qui, à l'extrême, peuvent entraîner une destruction des aubes mobiles, de la turbomachine et de son environnement (dans le domaine aéronautique, l'aéronef intégrant cette turbomachine par exemple).

### Objet et définition de l'invention

La présente invention a donc pour objet de proposer une méthode qui permette d'améliorer la répartition des aubes d'un rotor de turbomachine pour obtenir un meilleur équilibrage en fonctionnement. Un but de l'invention est aussi de proposer une méthode de répartition qui reste applicable lors des opérations de maintenance ultérieures aboutissant à des changements ponctuels d'aubes.

Ces buts sont atteints par un procédé de répartition des aubes d'un rotor de turbomachine dans lequel il est procédé tout d'abord à la mesure des moments statiques radial et tangentiel d'une pluralité d'aubes destinées à former ce rotor, puis ces aubes sont classées par paires selon un critère de choix déterminé dépendant de ces deux moments statiques préalablement mesurés, et enfin les paires choisies sont montées une à une sur le rotor en position diamétralement opposée.

Ainsi, par ce procédé spécifique on obtient un auto-équibrage des aubes quelles que soit leurs conditions de fonctionnement. Le balourd résiduel généré par les déformations des aubes est parfaitement contrôlé.

Le critère de choix consiste à déterminer entre deux aubes données à la fois un écart de moment statique radial et un écart de moment statique tangentiel et à vérifier que ces deux écarts ne sont pas supérieurs respectivement à une première valeur déterminée et à une deuxième valeur déterminée. De préférence, ces première et deuxième valeurs déterminées sont respectivement de 2.10⁻⁴mkg et de 4.10⁻⁴mkg.

Avantageusement, il est en outre procédé à la mesure du moment statique axial de ladite pluralité d'aubes et le classement par paires est effectué en prenant en compte le moment statique axial ainsi mesuré, le critère de choix consistant alors à déterminer un écart de moment statique axial entre lesdites deux aubes et à vérifier qu'il n'est pas supérieur à une troisième valeur déterminée, de préférence de 4.10⁻⁴mkg.

Il peut en outre être procédé au calcul du moment statique combiné de ladite pluralité d'aubes et le classement par paires est effectué en prenant en compte le moment statique combiné ainsi calculé, le critère de choix consistant dans ce cas à déterminer un produit des écarts de moment statique radial, tangentiel et axial entre lesdites deux aubes et à vérifier qu'il n'est pas supérieur à une quatrième valeur déterminée, de préférence de 1.10⁻⁴mkg.

### Brève description des dessins

Les caractéristiques et avantages de la présente invention ressortiront mieux de la description suivante, faite à titre indicatif et non limitatif, en regard des dessins annexés sur lesquels :
- la figure 1 montre un rotor de turbomachine muni d'aubes,
- la figure 2 est une vue de détail d'une aube particulière du rotor de la figure 1,
- la figure 3 est une vue schématique d'une machine de mesure du moment statique radial de l'aube de la figure 2, et
- les figures 4A à 7B montrent des exemples de diagrammes de répartition des moments statiques des aubes du rotor de la figure 1.

### Description détaillée d'un mode de réalisation préférentiel

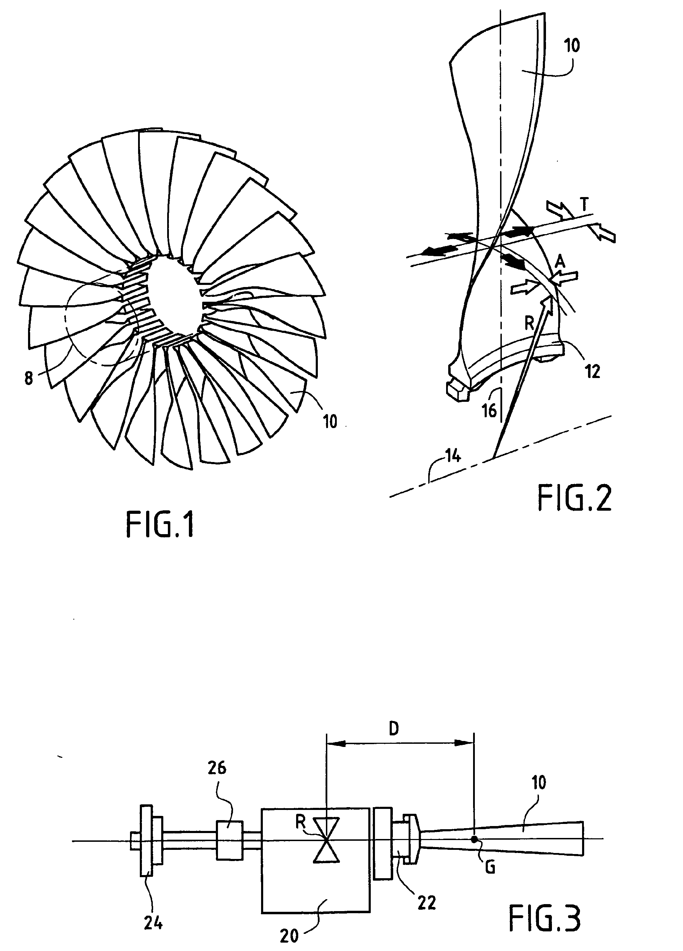

La figure 1 illustre un rotor de turbomachine comportant classiquement un disque central 8 sur la circonférence de laquelle sont montées une pluralité d'aubes 10. Ces aubes sont en nombre pair, par exemple 24 dans le cas d'un rotor de soufflante.

La figure 2 montre en détail une aube particulière de ce rotor. Cette aube 10 présente une forme d'aile vrillée avec un pied d'aube 12, par exemple en forme de sapin, pour assurer une liaison fixe avec le tambour du rotor. Sur cette figure ont aussi été représentés l'axe du rotor 14 (qui est aussi l'axe de la turbomachine), le centre de gravité G de l'aube et l'axe longitudinal de l'aube 16 (axe perpendiculaire à l'axe du rotor et passant par G). Ils permettent de définir des moments statiques 3D de cette aube. Il s'agit tout d'abord du moment statique radial (R), du moment statique tangentiel (T) et du moment statique axial (A), ces deux dernières composantes du moment statique étant définies par rapport à l'axe longitudinal 16. Ces trois composantes peuvent être mesurées pour chaque aube d'un rotor à l'aide de machines connues appropriées, par exemple la balance de précision illustrée à la figure 3.

Cette balance 20 à moments statiques 3D préalablement étalonnée permet en effet la mesure de moments statiques radial et axial. Pour ce faire, l'aube 10 est positionnée en fonctionnement centrifugé sur un disque de prise 22 qui est entraîné en rotation. Un contrepoids 24 associé à une bague de réglage 26 permet d'équilibrer la rotation. Le moment statique est égal au produit du bras de levier D (défini par rapport à la référence R de la balance) par la masse M appliquée au centre de gravité G de l'aube. Cette machine qui permet aussi la mesure du moment statique tangentiel par rotation de 90° du disque de prise 22 est bien connue et sa description en détail n'apparaît donc pas nécessaire.

Selon un mode de réalisation préférentiel de l'invention, pour effectuer une répartition des aubes d'un rotor de turbomachine qui garantisse un parfait équilibrage en fonctionnement, il est procédé tout d'abord au moins à la mesure des moments statiques radial et tangentiel d'une pluralité d'aubes destinées à former ce rotor, puis ces aubes sont classées par paires selon un critère de choix déterminé dépendant des mesures obtenues pour ces deux moments statiques, et enfin les aubes des paires choisies (c'est à dire éligibles et donc non rejetées) sont montées une à une sur le tambour du rotor en position diamétralement opposée (0°-180°). Selon un autre mode de réalisation, il peut aussi être procédé en sus à la mesure du moment statique axial de chacune de ces aubes, le critère de choix incluant alors cette mesure complémentaire.

Ce critère de choix permettant le classement des aubes en aubes éligibles et aubes rejetées repose sur le calcul d'écarts de moments statiques entre deux aubes appelées à former une même paire. Il s'agit en effet de déterminer d'une part un écart de moment statique radial entre deux aubes données et d'autre part un écart de moment statique tangentiel entre ces deux mêmes aubes et de vérifier que ces deux écarts ne sont pas respectivement supérieur à une première valeur déterminée et supérieur à une deuxième valeur déterminée. Si c'est le cas, les aubes sont considérées comme pouvant être montées sur le rotor en construction alors que, dans le cas contraire, elles sont rejetées.

Ces deux valeurs d'écart maximal déterminant le rejet ou non des aubes sont de préférence égales respectivement à 2.10⁻⁴mkg (200cmg) et 4.10⁻⁴mkg (400cmg).

Ce critère de choix peut être étendu à la composante axiale du moment statique qui est alors également déterminé pour la paire d'aubes analysée, l'écart maximal de moment statique axial au delà duquel l'aube doit être rejetée étant alors comparé à une troisième valeur égale aussi à 4.10⁻⁴mkg (400cmg). On notera bien entendu que ces valeurs limites prédéterminées ne sauraient être limitatives et des valeurs plus faibles sont parfaitement envisageables, par exemple respectivement 200cmg, 300cmg et 200cmg, sous réserve d'accepter alors un taux de rejet plus important (ou d'imposer des tolérances de fabrication des aubes plus faibles).

Enfin, la résultante du balourd provoqué par l'ensemble des aubes (le jeu complet) une fois montées sur le disque peut être contrôlée en procédant au calcul d'un moment résiduel statique combiné (soit radial + tangentiel ou radial + tangentiel + axial) relatif à ces aubes, dont la prise en compte permet de compléter utilement le critère de choix. Ce critère de choix additionnel correspond à la détermination du balourd des moments résiduels statiques radial, tangentiel (ou radial, tangentiel et axial selon le mode de réalisation envisagé) de toutes les aubes, qui ne doit pas être supérieur à une quatrième valeur prédéterminée, de préférence égale à 6.10⁻⁴mkg (respectivement 1.10⁻⁴mkg) pour ne pas entraîner un rejet du rotor dans son ensemble.

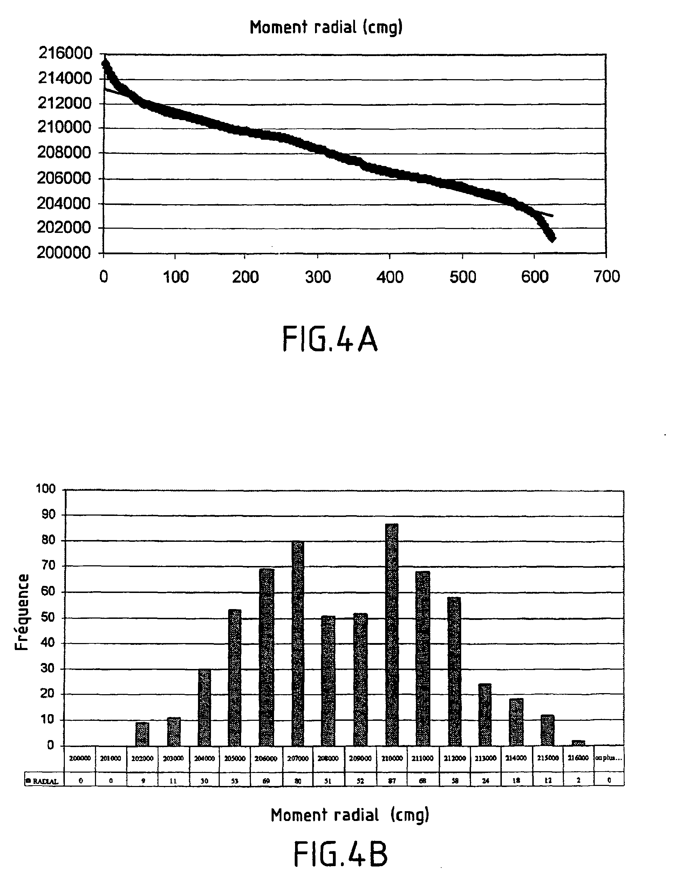

Un exemple de mise en oeuvre du procédé de l'invention est illustré aux figures 4A à 7B. Cet exemple est relatif à un rotor de soufflante comprenant un jeu de 24 aubes (numérotées de 1 à 24), la mesure des moments statiques 3D étant effectuée dans l'exemple illustré sur 26 jeux de 24 aubes (soit 624 aubes).

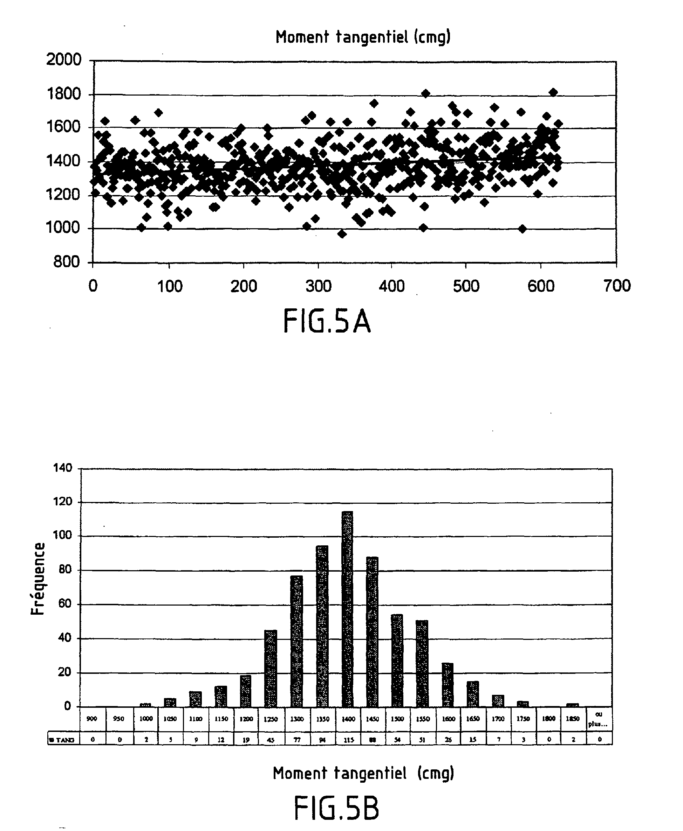

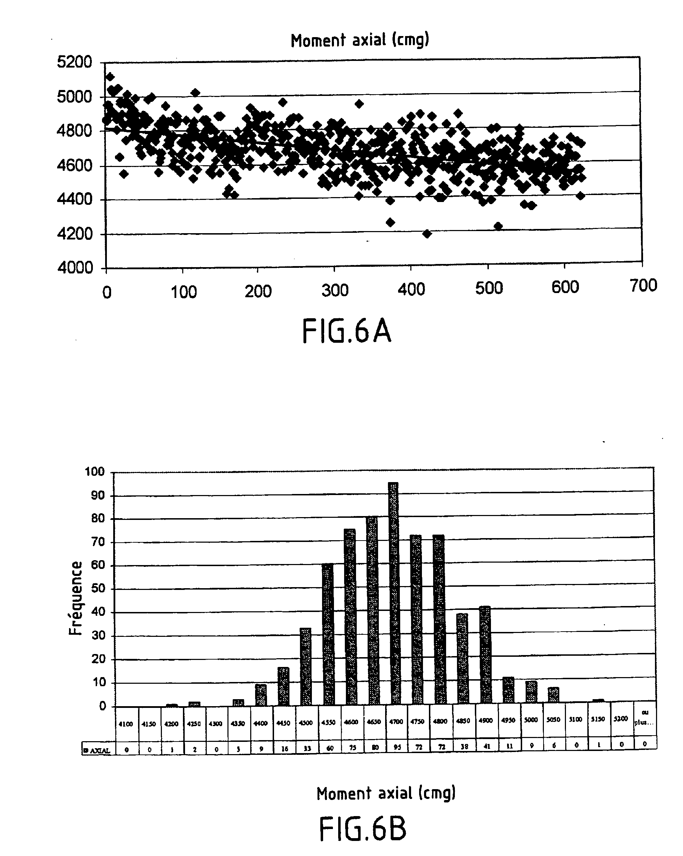

La figure 4A donne les valeurs des différents moments statiques radiaux mesurés pour chacune des aubes de ces 26 jeux. Dans l'exemple illustré, ces moments varient entre 201000 et 215000 cmg. La distribution de ces moments selon leurs valeurs est illustrée à la figure 4B. De même, la figure 5A donne les valeurs des différents moments statiques tangentiels mesurés pour chacune des aubes des différents jeux. Ces moments varient entre 950 et 1850 cmg. La distribution de ces moments selon leurs valeurs est illustrée à la figure 5B. et la figure 6A donne les valeurs des différents moments statiques axiaux mesurés pour chacune des aubes des différents jeux. Ces moments varient entre 4150 et 5150 cmg. La distribution de ces moments selon leurs valeurs est illustrée à la figure 6B.

Il est possible alors de classer ces aubes par paires de sorte que à la fois l'écart de moment statique radial soit inférieur à la première valeur prédéterminé, soit pour cet exemple 200cmg, que l'écart de moment statique tangentiel soit inférieur à la deuxième valeur prédéterminé, soit pour cet exemple 300cmg, et que l'écart de moment statique axial soit inférieur à la troisième valeur prédéterminé, soir pour cet exemple également 300cmg. On obtient ainsi le tableau suivant :

| N° Paire d'aubes | Ecart MS radial | Ecart MS axial | Ecart MS tangentiel |
|---|---|---|---|
| 1 (aubes 1 et 13) | 20 | 100 | 70 |
| 2 (aubes 2 et 14) | 60 | 120 | 110 |
| 3 (aubes 3 et 15) | 100 | 270 | 280 |
| 4 (aubes 4 et 16) | 20 | 250 | 140 |
| 5 (aubes 5 et 17) | 30 | 170 | 220 |
| 6 (aubes 6 et 18) | 60 | 80 | 60 |
| 7 (aubes 7 et 19) | 30 | 0 | 140 |
| 8 (aubes 8 et 20) | 50 | 210 | 260 |
| 9 (aubes 9 et 21) | 80 | 100 | 30 |
| 10 (aubes 10 et 22) | 140 | 150 | 110 |
| 11 (aubes 11 et 23) | 60 | 170 | 40 |
| 12 (aubes 12 et 24) | 60 | 160 | 240 |

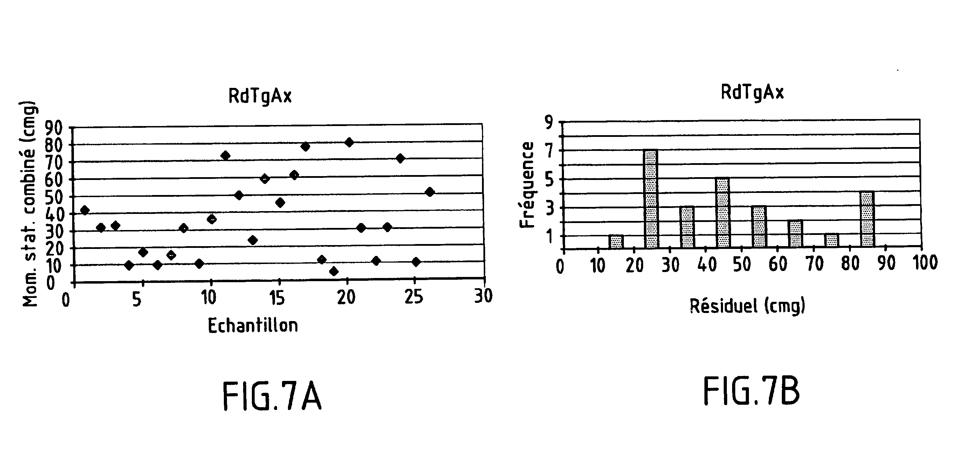

De préférence, on s'assurera ensuite que la résultante radiale (R) + tangentielle (T) + axiale (A) du balourd du jeu complet d'aubes (appelé aussi balourd d'ailetage) est inférieure à une quatrième valeur déterminée et égale à 100cmg dans cet exemple de réalisation à 24 aubes. La figure 7A donne les valeurs des différents moments statiques combinés (R+T+A) mesurées pour chacun des 26 jeux. Ces moments varient entre 11cmg et 80cmg et sont donc bien tous inférieurs à 100cmg. La distribution de ces moments résiduels selon leurs valeurs est illustrée à la figure 7B. On notera que si le balourd d'ailetage s'était écarté de cette valeur limite autorisée, il aurait été nécessaire de recourir à des permutations ou des changements de paires pour retrouver une valeur plus compatible avec la limite demandée.

Dans l'exemple précité, la répartition des 26 jeux de 24 aubes a été effectuée sur la base de moments statiques 3D, mais bien entendu, un mode dégradé sur les bases deux seuls moments statiques radial et tangentiel est aussi possible. Dans ce cas, la vérification du balourd d'ailetage résultant sera effectué sur la base de la seule résultante radiale et tangentielle (R+T) du moment statique.

Le procédé de l'invention exposé pour un jeu de 24 aubes est bien entendu applicable à un nombre quelconque d'aubes formant un sous ensemble d'aubes distribuées régulièrement sur la circonférence d'un rotor de turbomachine.

## Revendications

1. Procédé de répartition des aubes d'un rotor de turbomachine dans lequel il est procédé tout d'abord à la mesure des moments statiques radial et tangentiel d'une pluralité d'aubes destinées à former ce rotor, puis ces aubes sont classées par paires selon un critère de choix déterminé dépendant de ces deux moments statiques préalablement mesurés, et enfin les aubes des paires choisies sont montées une à une sur le rotor en position diamétralement opposée.

2. Procédé de répartition des aubes d'un rotor de turbomachine selon la revendication 1, **caractérisé en ce que** ledit critère de choix consiste à déterminer entre deux aubes données à la fois un écart de moment statique radial et un écart de moment statique tangentiel et à vérifier que ces deux écarts ne sont pas supérieurs respectivement à une première valeur déterminée et à une deuxième valeur déterminée.

3. Procédé de répartition des aubes d'un rotor de turbomachine selon la revendication 2, **caractérisé en ce que** ladite première valeur déterminée est de 2.10⁻⁴mkg.

4. Procédé de répartition des aubes d'un rotor de turbomachine selon la revendication 2, **caractérisé en ce que** ladite deuxième valeur déterminée est de 4.10⁻⁴ mkg.

5. Procédé de répartition des aubes d'un rotor de turbomachine selon la revendication 1, **caractérisé en ce qu**'il est en outre procédé à la mesure du moment statique axial de ladite pluralité d'aubes et le classement par paires est effectué en prenant en compte le moment statique axial ainsi mesuré.

6. Procédé de répartition des aubes d'un rotor de turbomachine selon la revendication 5 et la revendication 2, **caractérisé en ce que** ledit critère de choix consiste à déterminer un écart de moment statique axial entre lesdites deux aubes et à vérifier qu'il n'est pas supérieur à une troisième valeur déterminée.

7. Procédé de répartition des aubes d'un rotor de turbomachine selon la revendication 6, **caractérisé en ce que** ladite troisième valeur déterminée est de 4.10⁻⁴mkg.

8. Procédé de répartition des aubes d'un rotor de turbomachine selon la revendication 5, **caractérisé en ce qu'**il est en outre procédé au calcul du moment statique combiné de ladite pluralité d'aubes et le classement par paires est effectué en prenant en compte le moment statique combiné ainsi calculé.

9. Procédé de répartition des aubes d'un rotor de turbomachine selon la revendication 8, **caractérisé en ce que** ledit critère de choix consiste à déterminer un balourd des moments résiduels statiques radial, tangentiel et axial de ladite pluralité d'aubes et à vérifier qu'il n'est pas supérieur à une quatrième valeur déterminée.

10. Procédé de répartition des aubes d'un rotor de turbomachine selon la revendication 9, **caractérisé en ce que** ladite quatrième valeur déterminée est de 1.10⁻⁴mkg.

## Claims

1. A method of distributing the blades of a turbomachine rotor in which the radial and tangential static moments of a plurality of blades for making a rotor are initially measured, and then the blades are classified in pairs on the basis of a determined selection criterion depending on said previously measured two static moments, and finally the blades of the selected pairs are mounted one by one on the rotor in diametrically opposite positions.

2. A method of distributing the blades of a turbomachine rotor according to claim 1, **characterised in that** said selection criterion consists in determining for two given blades both a radial static moment difference and a tangential static moment difference, and in verifying that these two differences are respectively not greater than a first determined value and not greater than a second determined value.

3. A method of distributing the blades of a turbomachine rotor according to claim 2, **characterised in that** said first determined value is 2×10⁻⁴ m/kg.

4. A method of distributing the blades of a turbomachine rotor according to claim 2, **characterised in that** said second determined value is 4×10-⁴ m/kg.

5. A method of distributing the blades of a turbomachine rotor according to claim 1, **characterised in that** the axial static moment of said plurality of blades is also measured and the blades are classified in pairs while taking account of the axial static moment as measured in this way.

6. A method of distributing the blades of a turbomachine rotor according to claim 5 and claim 2, **characterised in that** said selection criterion consists in determining an axial static moment difference between said two blades and in verifying that it is not greater than a third determined value.

7. A method of distributing the blades of a turbomachine rotor according to claim 6, **characterised in that** said third determined value is 4×10⁻⁴ m/kg.

8. A method of distributing the blades of a turbomachine rotor according to claim 5, **characterised in that** the combined static moment of said plurality of blades is also calculated and the classification in pairs is performed while taking account of the combined static moment as calculated in this way.

9. A method of distributing the blades of a turbomachine rotor according to claim 8, **characterised in that** said selection criterion consists in determining the unbalance of the residual radial, tangential, and axial static moments of said plurality of blades and in verifying that it is not greater than a fourth determined value.

10. A method of distributing the blades of a turbomachine rotor according to claim 9, **characterised in that** said fourth determined value is 1×10⁻⁴ m/kg.

## Patentansprüche

1. Verfahren zum Verteilen der Schaufeln eines Rotors einer Turbomaschine, bei dem zunächst das radiale und das tangentiale statische Moment einer Vielzahl von Schaufeln, die dazu bestimmt sind, diesen Rotor zu bilden, gemessen wird, anschließend diese Schaufeln paarweise entsprechend einem bestimmten Auswahlkriterium, das von diesen zwei zuvor gemessenen statischen Momenten abhängt, klassifiziert werden, und schließlich die Schaufeln der ausgewählten Paare nacheinander an dem Rotor in diametral gegenüberliegender Position angebracht werden.

2. Verfahren zum Verteilen der Schaufeln eines Rotors einer Turbomaschine nach Anspruch 1, **dadurch gekennzeichnet, daß** das Auswahlkriterium darin besteht, zwischen zwei gegebenen Schaufeln sowohl eine Abweichung des radialen statischen Moments als auch eine Abweichung des tangentialen statischen Moments festzulegen und zu prüfen, daß diese zwei Abweichungen nicht größer sind als ein bestimmter erster Wert bzw. als ein bestimmter zweiter Wert.

3. Verfahren zum Verteilen der Schaufeln eines Rotors einer Turbomaschine nach Anspruch 2, **dadurch gekennzeichnet, daß** der bestimmte erste Wert 2.10⁻⁴ mkg beträgt.

4. Verfahren zum Verteilen der Schaufeln eines Rotors einer Turbomaschine nach Anspruch 2, **dadurch gekennzeichnet, daß** der bestimmte zweite Wert 4.10⁻⁴ mkg beträgt.

5. Verfahren zum Verteilen der Schaufeln eines Rotors einer Turbomaschine nach Anspruch 1, **dadurch gekennzeichnet, daß** außerdem das axiale statische Moment der Vielzahl von Schaufeln gemessen wird und die paarweise Klassifizierung unter Berücksichtigung des so gemessenen axialen statischen Moments vollzogen wird.

6. Verfahren zum Verteilen der Schaufeln eines Rotors einer Turbomaschine nach Anspruch 5 und Anspruch 2, **dadurch gekennzeichnet, daß** das Auswahlkriterium darin besteht, eine Abweichung des axialen statischen Moments zwischen den zwei Schaufeln festzulegen und zu prüfen, daß sie nicht größer ist als ein bestimmter dritter Wert.

7. Verfahren zum Verteilen der Schaufeln eines Rotors einer Turbomaschine nach Anspruch 6, **dadurch gekennzeichnet, daß** der bestimmte dritte Wert 4.10⁻⁴ mkg beträgt.

8. Verfahren zum Verteilen der Schaufeln eines Rotors einer Turbomaschine nach Anspruch 5, **dadurch gekennzeichnet, daß** außerdem das kombinierte statische Moment der Vielzahl von Schaufeln berechnet wird und die paarweise Klassifizierung unter Berücksichtigung des so berechneten kombinierten statischen Moments vollzogen wird.

9. Verfahren zum Verteilen der Schaufeln eines Rotors einer Turbomaschine nach Anspruch 8, **dadurch gekennzeichnet, daß** das Auswahlkriterium darin besteht, eine Unwucht des verbleibenden radialen, des verbleibenden tangentialen und des verbleibenden axialen statischen Moments der Vielzahl von Schaufeln festzulegen und zu prüfen, daß sie nicht größer ist als ein bestimmter vierter Wert.

10. Verfahren zum Verteilen der Schaufeln eines Rotors einer Turbomaschine nach Anspruch 9, **dadurch gekennzeichnet, daß** der bestimmte vierte Wert 1.10⁻⁴ mkg beträgt.
